# EUROPEAN PATENT APPLICATION

(11) **EP 4 438 324 A1**
(43) Date of publication of application: **02.10.2024**
(21) Application number: 23166175.2
(22) Date of filing: 31.03.2023
(51) Int. Cl.: B60C 1/00, C08L 15/00

(54) **RUBBER COMPOSITION FOR PNEUMATIC TYRE AND PNEUMATIC TYRE PRODUCED THEREFROM**

(71) Applicant: Bridgestone Europe NV/SA, 1930 Zaventem (BE)
(72) Inventor: BARTOLONI, Alessandra, 00128 Rome (IT); CALZETTA, Alessandra, 00128 Rome (IT); AURISICCHIO, Claudia, 00128 Rome (IT); CONSIGLIO, Micol Di, 00128 Rome (IT)
(74) Representative: Marks & Clerk LLP

(57) **Abstract**

A rubber composition for a pneumatic tyre comprising a styrene-butadiene copolymer having a low glass transition temperature and a blend of a hydrocarbon resin and one or more oils and a pneumatic tyre produced therefrom.

## Description

### FIELD OF THE INVENTION

The present invention is directed to a rubber composition for a pneumatic tyre, the use of the rubber composition in the manufacture of a pneumatic tyre and pneumatic tyres comprising or prepared from the rubber composition. The pneumatic tyres are suitable for passenger-type motor vehicles.

### BACKGROUND TO THE INVENTION

Pneumatic tyres for motor vehicles can be designed to perform well in specific conditions. For example, winter tyres remain soft at low temperatures (e.g. below 7°C) and thus provide traction in snowy or icy conditions. Such tyres are known from, for example, EP 2 643 400 A1. They are unsuitable for use in warmer temperatures because the soft compound wears more readily, reducing the lifetime of the tyre. The wet performance can also be reduced. Summer tyres are designed for high performance in warm conditions and can provide increased cornering and braking capabilities while still remaining suitable for wet conditions. This balance can be achieved by using a stiffer compound, i.e. one that softens at a higher temperature than a winter tyre compound. However, grip at low temperatures is reduced as a consequence and these tyres are unsuitable for winter conditions.

Manufacturing tyres having good performance in all conditions poses a particular challenge for tyre designers. They must provide balanced performance that makes them suitable for a range of driving conditions, including wet weather, dry conditions and winter conditions on a range of surface types, while also providing long tread life. Achieving these aims involves balancing parameters including the softening temperature of the tyre (indicated by the glass transition temperature (T_{g}) of the elastomers in the rubber compound) and its viscoelastic properties (indicated by the Payne effect and the ratio between loss and storage modulus (tanδ)). In particular, it can be a challenge to prepare tyres with good winter performance that maintain good wet and dry performance. Such tyres typically use elastomers having a low T_{g} to provide the required grip at low temperatures, which needs to be balanced with other factors (e.g. filler and resin/plasticizer loading) to provide suitable performance in wet and dry conditions and a long tyre life.

Resins, in particular hydrocarbon resins, are additives which are known for use in rubber compositions for the treads of pneumatic tires. They can be used as processing auxiliaries to provide properties such as green tack to the rubber compositions. Tack is the ability of two materials to resist separation after bringing their surfaces into contact for a short time under a light pressure. A certain level of tack is necessary so that the many components of a green tyre can be processed into a moulded tyre product. Furthermore, certain properties, such as hardness, modulus and swelling properties, can be influenced by resins.

In order to maintain good processability at high resin loadings compatibility between the elastomers, resins, plasticizers and fillers is required. As a result, pneumatic tyre designers must carefully choose the combination of these components that make up the rubber compound. For example, in EP2643401A1 resins are mixed with liquid plasticizers in order to improve the processability of the rubber composition. However, there remains a need in the art to provide rubber compositions for pneumatic tyres having a balanced performance across a range of driving conditions including good winter performance while maintaining good processability.

The present invention aims to provide a solution to one or more of the problems identified above.

### SUMMARY OF THE INVENTION

The present inventors have discovered that pneumatic tyres having an improved balance of wet/dry grip/dry handling/processability while maintaining winter performance can be prepared from a rubber composition comprising a polymer comprising a heteroatomic functional group and a resin comprising a heteroatomic functional group. The interaction between the polymer and resin functional groups is important for the beneficial performance properties of the tyre without having a negative impact on processability.

Viewed from a first aspect, the present invention is directed to a rubber composition for a pneumatic tyre comprising:
a styrene and butadiene copolymer (SBR), wherein the SBR has a glass transition temperature (T_{g}) of from -90°C to -30°C, and wherein the SBR comprises a heteroatomic functional group;
optionally a diene elastomer; and,
a hydrocarbon resin comprising a heteroatomic functional group, wherein the hydrocarbon resin has a T_{g} of at least 30°C; and,
an oil;
wherein the total amount of the hydrocarbon resin and the oil is at least 40 phr.

Viewed from a second aspect, the present invention is directed to a pneumatic tyre comprising the rubber composition as described hereinabove.

Viewed from a third aspect, the present invention is directed to a pneumatic tyre prepared from the rubber composition as described hereinabove.

Viewed from a fourth aspect, the present invention is directed to the use of the rubber composition as described hereinabove in the manufacture of a pneumatic tyre.

Further advantageous features of the present invention are set out in the description of the invention below, the figures and the dependent claims.

### DETAILED DESCRIPTION OF THE INVENTION

Resins can exhibit lower miscibility when used in rubber compositions with low T_{g} (i.e. <0°C) polymer blends, which results in lower filler dispersion and higher stiffness, thus having a positive impact on wet/dry grip and dry handling balance while keeping winter performance and avoiding negative impact on processability. The present inventors have discovered that the use of a polymer comprising a heteroatomic functional group with a resin comprising a heteroatomic functional group results in an interactive effect where immiscibility is increased leading to an improved balance of wet/dry grip and dry handling balance while keeping winter performance and avoiding negative impact on processability. The concept of resin immiscibility can be beneficial to improve the wet/dry grip/dry handling balance controlled by the increase of hysteresis loss between 0-30°C. As a result, the rubber compositions of the present invention are well suited for making pneumatic tyres having these properties.

According to the above, in one aspect the present invention provides a rubber composition for a pneumatic tyre comprising:
a styrene and butadiene copolymer (SBR), wherein the SBR has a glass transition temperature (T_{g}) of from -90°C to -30°C, and wherein the SBR comprises a heteroatomic functional group;
optionally a diene elastomer; and,
a hydrocarbon resin comprising a heteroatomic functional group, wherein the hydrocarbon resin has a T_{g} of at least 30°C; and,
an oil;
wherein the total amount of the hydrocarbon resin and the oil is at least 40 phr.

### Elastomers

The copolymer of styrene and butadiene may be a styrene-butadiene copolymer (abbreviated as SBR) and may be an emulsion SBR or eSBR (i.e. an SBR prepared by emulsion polymerization), a solution SBR or sSBR (i.e. an SBR prepared by solution polymerization), or a mixture of both. The T_{g} of the copolymer of styrene and butadiene may be from -75°C to -40°C, preferably from -65°C to -50°C, for example -65°C, - 60°C, -55°C, or -50°C. The skilled person is aware of how the structure of the copolymer may be modified in order to adjust the T_{g} to the required value. The copolymer of styrene and butadiene may be present in an amount of at least 50 phr, preferably from 60 to 100 phr, more preferably 100 phr.

The SBR may have a styrene content of from 1% to 20% by weight, more preferably from 5% to 15% by weight of the SBR, for example, 5%, 10%, or 15% by weight of the SBR. The SBR may have a vinyl content of from 20% to 40% by weight, more preferably from 28% to 38% by weight of the SBR, for example, 28, 29, 30, 31, 32, 33, 34, 35, 36, 37, or 38% by weight of the SBR.

The SBR may be functionalised with one or more functional groups. These functional groups may be terminal functional groups, pendant functional groups or both terminal and pendant functional groups. Preferably, the one or more functional groups may be selected from the group consisting of alcohol, carboxyl, ester, amide, amine, imine, imide, nitrile, oxime, thiol, sulfide, sulfoxide, sulfone, sulfinic acid, sulfonic acid, sulfonate ester, thiocarboxylic acid, thioester, silane, alkoxysilane, aminosilane and silanol, more preferably carboxyl or aminosilane.

In the embodiment wherein the SBR is functionalised with carboxyl groups, these groups may be terminal carboxyl groups having the structure of Formula (I): 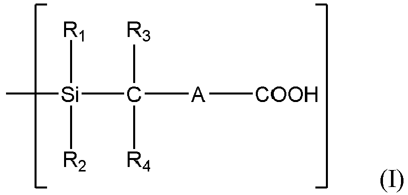 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉, wherein R₇ may be hydrogen, C₁ to C₆ linear alkyl, preferably methyl, or trimethylsilyl and wherein R₈ and R₉ may independently be C₁ to C₆ linear alkyl, preferably methyl.

In Formula (I), R₁ and R₂ may each independently be a hydrogen, C₁ to C₁₂ linear or branched alkyl, C₂ to C₁₂ linear or branched alkenyl, C₁ to C₁₂ linear or branched alkoxy, C₃ to C₁₂ cycloalkyl, C₂ to C₁₂ cycloalkoxy, C₆ to C₁₂ aryl, C₆ to C₁₂ aryloxy, C₇ to C₁₄ arylalkyl, C₇ to C₁₄ alkylaryl, C₆ to C₂₄ alkylaryloxy, C₅ to C₂₄ aralkyl, or a C₆ to C₂₄ aralkoxy radical. Preferably, R₁ and R₂ may each independently be a C₁ to C₆ linear or branched alkyl, C₂ to C₆ linear or branched alkenyl, C₁ to C₆ linear or branched alkoxy, C₃ to C₁₂ cycloalkyl, C₂ to C₁₂ cycloalkoxy, or a C₆ to C₁₂ aryl radical. Preferably, R₁ and R₂ may each independently be a C₁ to C₆ linear or branched alkyl, C₂ to C₆ linear or branched alkenyl, C₁ to C₆ linear or branched alkoxy, or a C₆ to C₁₂ aryl radical. Preferably, R₁ and R₂ may each independently be a C₁ to C₃ linear or branched alkyl, C₂ to C₃ linear or branched alkenyl, C₁ to C₃ linear or branched alkoxy, or a C₆ aryl radical. For example, R₁ and R₂ may each independently be a methyl, tert-butyl, prop-1-enyl, ethoxy, or phenyl radical. More preferably, R₁ and R₂ are methyl radicals.

R₃ and R₄ may each independently be a hydrogen, C₁ to C₁₂ linear or branched alkyl, C₃ to C₁₂ cycloalkyl, C₆ to C₁₂ aryl, C₅ to C₂₄ aralkyl, or a C₅ to C₂₄ alkaryl radical. Preferably R₃ and R₄ may each independently be a hydrogen, C₁ to C₆ linear or branched alkyl, C₂ to C₆ linear or branched alkenyl, C₁ to C₆ linear or branched alkoxy, or a C₆ to C₁₂ aryl radical. More preferably, R₃ and R₄ may each independently be a hydrogen or methyl radical. In a particular embodiment, R₃/R₄ and "A" together form a C₆ aryl.

"A" may independently be a substituted or unsubstituted C₁ to C₆ linear alkyl radical; one or more heteroatoms selected from the group consisting of O, NR₇, S and SiR₈R₉; or, a substituted or unsubstituted C₁ to C₆ linear alkyl radical containing one or more heteroatoms selected from the group consisting of O, NR₇, S, and SiR₈R₉. Preferably, "A" may independently be a substituted or unsubstituted C₁ to C₃ linear alkyl radical; one or more heteroatoms selected from the group consisting of O, NR₇, S and SiR₈R₉; or, a substituted or unsubstituted C₁ to C₃ linear alkyl radical containing one or more heteroatoms selected from the group consisting of O, NR₇, S, and SiR₈R₉. Where "A" is substituted, it may be substituted with one or more selected from the group consisting of a C₁ to C₆ linear alkyl radical, and a C₆ to C₁₂ aryl radical. Preferably, "A" may be substituted with a C₁ to C₃ linear alkyl radical or a C₆ aryl radical. More preferably, "A" may be substituted with a C₁ radical. R₇ may be hydrogen, C₁ to C₆ linear alkyl, for example methyl, or trimethylsilyl. R₈ and R₉ may independently be C₁ to C₆ linear alkyl, for example methyl.

Preferably, A is a C₂ alkyl radical containing an S atom. The structure of "A" as a C₂ alkyl radical containing an S atom is presented below.

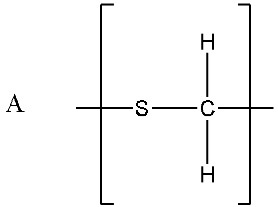

The carboxyl groups may be present as a carboxylate of the Formula (II): 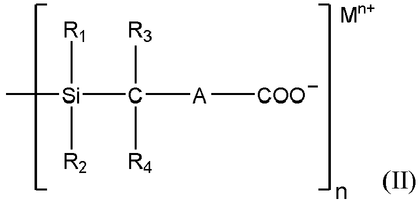 wherein:
R₁ and R₂ are as defined above for Formula (I);
R₃ and R₄ are as defined above for Formula (I);
A is as defined above for Formula (I);
M is a metal or semi-metal of valency 1 to 4, for example, Li, Na, K, Mg, Ca, Zn, Fe, Co, Ni, Al, Nd, Ti, Sn, Si, Zr, V, Mo or W; and
n is an integer from 1 to 4.

In the compounds of Formula (II), M may be Li and n may be 1.

The further definitions of R₁, R₂, R₃, R₄, R₇, R₈ and R₉ in Formula (II) are the same as those above for Formula (I).

The functionalised SBR may be obtainable by reaction of the SSBR copolymer with one or more functionalising reagents in the form of silalactones. The silalactones may be compounds of the Formula (III): 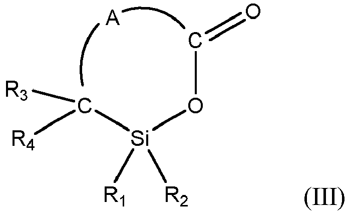 wherein
R₁ and R₂ are as defined above for Formula (I);
R₃ and R₄ are as defined above for Formula (I); and,
A is as defined above for Formula (I).

The further definitions of R₁, R₂, R₃, R₄, R₇, R₈ and R₉ in Formula (III) are as described above for Formula (I).

Advantageously, the silalactones of Formula (III) may be one or more selected from the group consisting of 2,2-dimethyl-1-oxa-2-silacyclohexan-6-one, 2,2,4-trimethyl-I-oxa-2-silacyclohexan-6-one, 2,2,5-trimethyl-1-oxa-2-silacyclohexan-6-one, 2,2,4,5-tetramethyl-1-oxa-2-silacyclohexan-6-one, 2,2-diethyl-1-oxa-2-silacyclohexan-8-one, 2,2-diethoxy-1-oxa-2-silacyclohexan-6-one, 2,2-dimethyl-1,4-dioxa-2-silacyclohexan-6-one, 2,2,5-trimethyl-1,4-dioxa-2-silacyclohexan-6-one, 2,2,3,3-tetramethyl-1,4-dioxa-2-silacyclohexan-6-one, 2,2-dimethyl-1-oxa-4-thia-2-silacyclohexan-6-one, 2,2-diethyl-1-oxa-4-thia-2-silacyclohexan-6-one, 2,2-diphenyl-1-oxa-4-thia-2-silacyclonexan-6-one, 2-methyl-2-ethenyl-1-oxa-4-thia-2-silacyclohexan-6-one, 2,2,5-trimethyl-1-oxa-4-thia-2-silacyclohexan-6-one, 2,2-dimethyl-1-oxa-4-aza-2-silacyclohexan-6-one, 2,2,4-trimethyl-1-oxa-4-aza-2-silacyclohexan-6-one, 2,4-dimethyl-2-phenyl-1-oxa-4-aza-2-silacyclohexan-6-one, 2,2-dimethyl-4-trimethylsilyl-1-oxa-4-aza-2-silacyclohexan-8-one, 2,2-diethoxy-4-methyl-1-oxa-4-aza-2-silacyclohexan-6-one, 2,2,4,4-tetramethyl-1-oxa-2,4-disilacyclohexan-8-one, 3,4-dihydro-3,3-dimethyl-1H-2,3-benzoxasilin-1-one, 2,2-dimethyl-1-oxa-2-silacyclopentan-5-one, 2,2,3-trimethyl-1-oxa-2-silacyclopenten-5-one, 2,2-dimethyl-4-phenyl-1-oxa-2-silacyclopentan-5-one, 2,2,4-(tert-butyl)-1-oxa-2-silacyclopentan-5-one, 2-methyl-2-(2-propen-1-yl)-1-oxa-2-silacyclopentan-5-one, 1,1-dimethyl-2,1-benzoxasilol-3(1H)-one, 2,2-dimethyl-1-oxa-2-silacycloheptan-7-one. Preferably, the silalactone of Formula (III) is 2,2-dimethyl-1-oxa-4-thia-2-silacyclohexan-6-one. The structure of 2,2-dimethyl-1-oxa-4-thia-2-silacyclohexan-6-one is presented below.

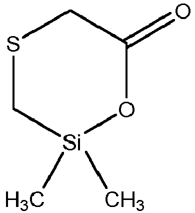

The carboxyl group may be bonded to the SBR copolymer via one or more divalent structural elements of the Formula (V): 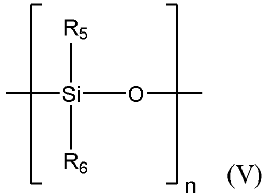 wherein
n is an integer from 3 to 6;
R₅, R₆ are the same or different and are each independently a hydrogen, alkyl, cycloalkyl, aryl, alkaryl, or aralkyl radical;
which may contain one or more heteroatoms, preferably wherein the heteroatoms are one or more selected from the group consisting of O, N, S or Si.

When the divalent structural element is present, the SBR copolymer is bonded at the silicon end of the divalent structural element according to the below:

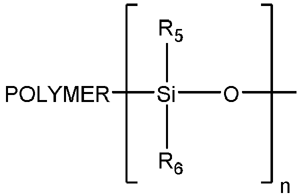

The silane-containing carboxyl group of Formula (I) or (II) is bonded at the oxygen end of the divalent structural element of Formula (V), when the divalent structural element is present.

The divalent structural elements of the Formula (V) may be derived from cyclosiloxanes, such as cyclosiloxanes of the Formula (IV): 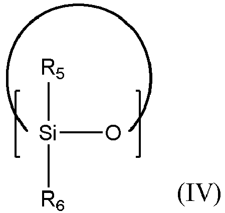 wherein
n is as defined above for Formula (V);
R₅, R₆ are as defined above for Formula (V).

R₅ and R₆ may each independently a hydrogen, C₁ to C₁₂ linear or branched alkyl, C₃ to C₁₂ cycloalkyl, C₆ to C₁₂ aryl, C₇ to C₁₄ aralkyl, or a C₇ to C₁₄ alkaryl radical. Preferably, R₅ and R₆ may each independently be a C₁ to C₆ linear or branched alkyl, preferably, C₁ to C₃ linear alkyl, more preferably a methyl radical.

The divalent structural elements of the Formula (V) may be derived from one or more selected from the group consisting of hexamethylcyclotrisiloxane, octamethylcyclotetrasiloxane, decamethylcyclopentasiloxane and dodecamethylcyclohexasiloxane. Preferably, the divalent structural element is derived from hexamethylcyclotrisiloxane.

It is particularly advantageous for the SBR copolymer to be terminated with carboxyl groups derived from 2,2-dimethyl-1-oxa-4-thia-2-silacyclohexan-6-one that is bonded to the polymer via a divalent structural element derived from hexamethylcyclotrisiloxane. In this embodiment, the carboxyl group of Formula (I) (having R₁, R₂, R₃ and R₄ as methyl radicals and "A" as the C₂ alkyl radical containing an S atom shown above) is bonded to the copolymer by the divalent structural element according to Formula (V), wherein R₅ and R₆ are methyl radicals and n is 3.

In the embodiment wherein the SBR is functionalised with aminosilane groups, these groups are preferably terminal aminosilane groups having a structure according to Formula (VI): 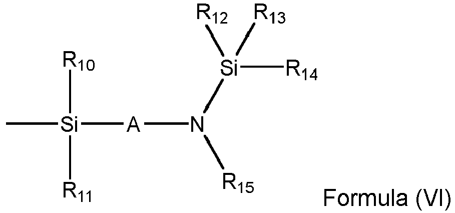 wherein:
A is a C₁-C₁₂ alkylene group or a C₁-C₁₂ alkenylene group;
R₁₀ and R₁₁ are independently selected from a C₁-C₁₂ alkyl group, a C₁-C₁₂ alkenyl group, and a C₁-C₁₂ alkoxy group;
R₁₂, R₁₃ and R₁₄ are independently selected from a C₁-C₁₂ alkyl group, a C₁-C₁₂ alkenyl group, and a C₁-C₁₂ alkoxy group;
R₁₅ may be a C₁-C₁₂ alkyl group or a -SiR₁₆R₁₇R₁₈ group, wherein R₁₆, R₁₇ and R₁₈ are independently selected from a C₁-C₁₂ alkyl group, a C₁-C₁₂ alkenyl group, and a C₁-C₁₂ alkoxy group.

Preferably:
A is a C₁-C₁₂ alkylene group;
R₁₀ and R₁₁ are independently selected from a C₁-C₁₂ alkyl group, and a C₁-C₁₂ alkoxy group;
R₁₂, R₁₃ and R₁₄ are independently selected from a C₁-C₁₂ alkyl group, a C₁-C₁₂ alkenyl group, and a C₁-C₁₂ alkoxy group;
R₁₅ is a -SiR₁₆R₁₇R₁₈ group, wherein R₁₆, R₁₇ and R₁₈ are independently selected from a C₁-C₁₂ alkyl group, a C₁-C₁₂ alkenyl group, and a C₁-C₁₂ alkoxy group.

More preferably:
A is a C₂-C₄ alkylene group;
R₁₀ is a C₁-C₄ alkoxy group and R₁₁ is a C₁-C₄ alkyl group, and;
R₁₂, R₁₃ and R₁₄ are each independently a C₁-C₄ alkyl group;
R₁₅ is a -SiR₁₆R₁₇R₁₈ group, wherein R₁₆, R₁₇ and R₁₈ are each independently a C₁-C₄ alkyl group.

More preferably:
A is a C₂-C₄ alkylene group;
R₁₀ is a C₁-C₄ alkoxy group and R₁₁ is a C₁-C₄ alkyl group, and;
R₁₂, R₁₃ and R₁₄ are a C₁-C₃ alkyl group;
R₁₅ is an -SiR₁₆R₁₇R₁₈ group, wherein R₁₆, R₁₇ and R₁₈ are a C₁-C₃ alkyl group.

The composition may further comprise a diene elastomer. A diene elastomer is an elastomer derived at least in part (e.g. in a homopolymer or a copolymer) of diene monomers, i.e. monomers carrying two carbon-carbon double bonds, which may or may not be conjugated. Examples of suitable diene elastomers include polybutadienes, natural rubber, synthetic polyisoprenes, butadiene copolymers, isoprene copolymers and mixtures thereof. In preferred embodiments, the diene elastomer is a polybutadiene rubber. When present, the diene elastomer may be present in an amount of up to 50 phr, preferably up to 40 phr.

### Oils

The rubber composition comprises one or more oils, which are liquid at standard ambient temperature and pressure (25°C, 10⁵ Pa). They may also be referred to as liquid plasticisers. The oils may have a glass transition temperature of below -20°C. These oils may be, for example, one or more selected from the group consisting of liquid diene polymers, polyolefinic oils, naphthenic oils, paraffinic oils, DAE oils, MES (Medium Extracted Solvates) oils, TDAE (Treated Distillate Aromatic Extracts) oils, RAE oil (Residual Aromatic Extract oil), TRAE oil (Treated Residual Aromatic Extract) and SRAE oil (Safety Residual Aromatic Extract oil), mineral oils, vegetable oils, ether plasticizers, ester plasticizers, preferably RAE oil, oleates such as octyl oleate or 2-ethylhexyl oleate, phosphate plasticizers, sulfonate plasticizers and mixtures thereof. More preferably, the oil is a mixture of octyl oleate and RAE oil. The oil may be present in an amount of from 10 to 40 phr, preferably from 20 to 35 phr, more preferably from 25 to 30 phr, for example 25, 26, 27, 28, 29, or 30 phr.

### Hydrocarbon resin

Resins are compounds that are solid or highly viscous at standard ambient temperature and pressure (25°C, 10⁵ Pa). Hydrocarbon resins are essentially based on carbon and hydrogen but may comprise other types of atoms. They can be aliphatic, cycloaliphatic, aromatic, hydrogenated aromatic, and aliphatic/aromatic, i.e. based on aliphatic and/or aromatic monomers. Hydrocarbon resins can also be qualified as thermoplastic resins in the sense that they soften on heating and can thus be moulded.

Examples of such hydrocarbon resins include those selected from the group consisting of cyclopentadiene homopolymer or copolymer resins (abbreviated as CPD), dicyclopentadiene homopolymer or copolymer resins (abbreviated as DCPD), terpene homopolymer or copolymer resins, rosinic resins, C₅ homopolymer or copolymer resins which may be partially or fully hydrogenated, C₉ homopolymer or copolymer resins which may be partially or fully hydrogenated, alpha-methyl-styrene homopolymer or copolymer resins and combinations thereof. Any hydrocarbon resin comprising a heteroatomic functional group and fulfilling the glass transition temperature requirements may be used with the present invention.

The hydrocarbon resin comprising a heteroatomic functional group may be present in an amount of from 5 to 50 phr, preferably from 10 to 40 phr, preferably from 15 to 35 phr, more preferably from 25 to 30 phr, for example 25, 26, 27, 28, 29, or 30 phr.

The hydrocarbon resin comprising a heteroatomic functional group may be a hydrocarbon resin comprising a heteroatomic functional group selected from the group consisting of alcohol, carboxyl, ester, amide, amine, thiol, and sulfonic acid. Preferably the heteroatomic functional group is a carboxyl group. Accordingly, the hydrocarbon resin comprising a heteroatomic functional group may be a hydrocarbon resin comprising a carboxyl group.

In a particularly preferred embodiment, the hydrocarbon resin comprising a carboxyl group is a rosinic resin. Rosinic resins include resins that are mixtures of isomer organic acids (e.g. resin acid or rosin acids), characterised by a common structure comprising three C₆ fused rings, double bonds and a single carboxylic group. Rosin is a solid resinous material that occurs naturally in pine trees. There are three major sources of rosin, (1) gum rosin from the oleoresin extrudate of the living pine tree, (2) wood rosin from the oleoresin contained in the aged stumps; and (3) tall oil rosin from the waste carboxyl group to the liquor recovered as a by-product in the Kraft paper industry. The primary component of rosin is typically abietic acid. Rosinic resins include rosin ester resins, which may be an ester of rosin and a polyhydric alcohol. The polyhydric alcohol can be selected from the group consisting of ethylene glycol, propylene glycol, diethylene glycol, triethylene glycol, tetraethylene glycol, trimethylene glycol, pentaerythritol, dipentaerythritol, tripentaerythritol, trimethylolethane, trimethylolpropane, mannitol, sorbitol, and mixtures thereof. Any rosinic resin that fulfils the glass transition temperature requirement can suitably be used in the present invention. Suitable rosinic resins include the Kraton Sylvatraxx 2097.

The softening point of the rosinic resin may be greater than 50°C, preferably from 70°C to 130°C, more preferably from 90°C to 110°C, for example 90°C, 95°C, 100°C, or 110°C or any intermediate value. The softening point of a material is the temperature at which is softens beyond a certain softness, which is measured using a ring and ball apparatus according to ISO 4625.

The aromaticity of the rosinic resin as measured by ¹H NMR may greater than 1, preferably from 3.5 to 9.5, preferably 6.5. Aromaticity values defined herein are measured by ¹H NMR as the percentage content of aromatic protons having a chemical shift from 6.5 to 8.5 ppm.

The total amount of the hydrocarbon resin comprising a heteroatomic functional group and the oil may be from 45 to 70 phr, preferably from 50 to 60 phr, for example 50, 51, 52, 53, 54, 55, 56, 57, 58, 59, or 60 phr.

The ratio of the hydrocarbon resin comprising a heteroatomic functional group to the oil may be from 3:1 to 1:3, preferably from 2:1 to 1:2, more preferably from 1.5:1 to 1:1.5.

### Filler components

The rubber composition may further comprises an inorganic reinforcing filler, which may include silica-based mineral fillers and/or aluminium-based mineral fillers. The present inventors have discovered that a high surface area silica can be beneficial in providing the technical effects of the present invention. Preferably the high surface area silica has a CTAB specific surface area of at least 150 m²g⁻¹, preferably from 175 to 225 m²g⁻¹, more preferably from 185 to 215 m²g⁻¹, for example 185, 190, 195, 200, 205, 210 or 215 m²g⁻¹.

Additional silaceous fillers that are suitable include precipitated amorphous silica, wet silica (hydrated silicic acid), dry silica (anhydrous silicic acid), fumed silica, calcium silicate, aluminum silicate, magnesium silicate (e.g., Mg₂SiO₄, MgSiOs), magnesium calcium silicate (CaMgSiO₄), aluminum calcium silicate (e.g., Al₂O₃.CaO₂SiO₂). Preferably, the aluminium-based filler is alumina (Al₂O3) or aluminum hydroxide (e.g. Al(OH)₃). In preferred embodiments, the inorganic reinforcing filler is a combination of silica and aluminium hydroxide (Al(OH)₃). The total amount of inorganic reinforcing filler (e.g. silica) may be at least 70 phr, preferably from 120 to 140 phr.

The rubber composition may comprise additional fillers (i.e. fillers in addition to the inorganic reinforcing filler), such as carbon black. The carbon black may be furnace black, channel blacks, and lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. The carbon black may be in pelletized form or an unpelletized flocculent mass. A specific example of the carbon black in the rubber compositions of the present invention is CORAX^{®} N234 by Orion Engineered Carbons. The amount of carbon black that the rubber compositions of the present invention comprises is not particularly limited, but may be from 0.1 to 20 parts by weight of the rubber component, for example from 5 to 15 phr, for example, 5, 6, 7, 8, 9, 10, 11, 12, 13, 14, or 15 phr.

### Additional components

The rubber composition may further comprises one or more oils, which are liquid at standard ambient temperature and pressure (25°C, 10⁵ Pa). They may also be referred to as liquid plasticisers. These oils may be, for example, one or more selected from the group consisting of liquid diene polymers, polyolefinic oils, naphthenic oils, paraffinic oils, DAE oils, MES (Medium Extracted Solvates) oils, TDAE (Treated Distillate Aromatic Extracts) oils, RAE oil (Residual Aromatic Extract oil), TRAE oil (Treated Residual Aromatic Extract) and SRAE oil (Safety Residual Aromatic Extract oil), mineral oils, vegetable oils, ether plasticizers, ester plasticizers, preferably oleates such as octyl oleate or 2-ethylhexyl oleate, phosphate plasticizers, sulfonate plasticizers and mixtures thereof. In preferred embodiments, the oil may be a combination of TDAE oils and octyl oleate. The oil may be present in an amount of at least 1 phr, preferably 5 to 40 phr, more preferably 7 to 15 phr, for example 7, 8, 9, 10, 11, 12, 13, 14, or 15 phr.

In addition to the components described above the rubber compositions may comprise additional components that the skilled person would include in order to prepare rubber compositions that are suitable the preparation of pneumatic tyres. These include, for example, vulcanising agents (such as sulphur), vulcanisation accelerators, vulcanisation accelerator auxiliaries, silane coupling agents, anti-degradation agents (such as antioxidants or anti-ozonants), waxes, and processing agents.

In a preferred embodiment:
the SBR comprising a heteroatomic functional group is present in an amount of from 60 to 100 phr, has a T_{g} of from -65°C to-55°C and comprises terminal aminosilane groups having a structure according to Formula (I): 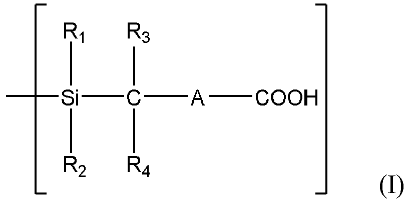 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉, wherein R₇ may be hydrogen, C₁ to C₆ linear alkyl, preferably methyl, or trimethylsilyl and wherein R₈ and R₉ may independently be C₁ to C₆ linear alkyl, preferably methyl.
wherein the hydrocarbon resin comprising a heteroatomic functional group is a rosinic resin having a T_{g} of less than 60°C and is present in an amount of from 25 to 30 phr; and,
the oil is a mixture of RAE oil and 2-ethylhexyl oleate and wherein the oil is present in an amount of from 25 to 30 phr;
wherein the total of the hydrocarbon resin comprising a heteroatomic functional group and the oil is from 50 to 60 phr.

In another preferred embodiment:
the SBR comprising a heteroatomic functional group is present in an amount of from 60 to 100 phr, has a T_{g} of from -65°C to-55°C and comprises terminal aminosilane groups having a structure according to Formula (VI): 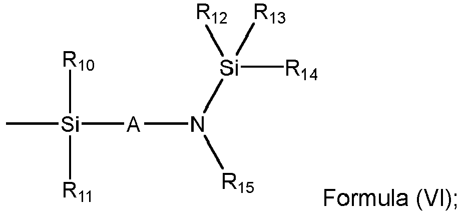 wherein:
A is a C₂-C₄ alkylene group;
R₁₀ is a C₁-C₄ alkoxy group and R₁₁ is a C₁-C₄ alkyl group, and;
R₁₂, R₁₃ and R₁₄ are a C₁-C₃ alkyl group;
R₁₅ is an -SiR₁₆R₁₇R₁₈ group, wherein R₁₆, R₁₇ and R₁₈ are a C₁-C₃ alkyl group;
wherein the hydrocarbon resin comprising a heteroatomic functional group is a rosinic resin having a T_{g} of less than 60°C and is present in an amount of from 25 to 30 phr; and,
the oil is a mixture of RAE oil and 2-ethylhexyl oleate and wherein the oil is present in an amount of from 25 to 30 phr;
wherein the total of the hydrocarbon resin comprising a heteroatomic functional group and the oil is from 50 to 60 phr.

In preparing the rubber composition of the present invention, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer or Banbury mixer may be used. For moulding the rubber composition into sheet or strip shape, any known moulding machine such as extrusion moulding machine or press moulding machine may be used. The vulcanization conditions for hardening the above rubber composition are not limited and can be any of those known to the person skilled in the art. Typically, however, vulcanization conditions of treatment at 140 to 180° C for 5 to 120 minutes are employed.

Unless otherwise indicated, the amounts of the components in the rubber compositions of the present invention are provided in parts per hundred rubber (phr), which means parts by weight per hundred parts of elastomer (or of the total elastomers if several elastomers are present). The term "rubber composition" may be used interchangeably with the term "rubber compound".

### Pneumatic tyres

In a further aspect, the present invention is directed to pneumatic tyres. The pneumatic tyres are not particularly limited and may be any tyres used on passenger vehicles such as cars, motorbikes, and commercial goods vehicles, for example. The pneumatic tyres may be suited to any type of climate, weather or road conditions and may be, for example, a summer tyre, a winter tyre, a snow tyre, an all-season tyre, or a high performance tyre.

In view of the above, the present invention is directed to a pneumatic tyre comprising the rubber composition of the present invention and/or a pneumatic tyre prepared from the rubber composition of the present invention.

In a further aspect, the present invention is directed to the use of the rubber composition in the manufacture of a pneumatic tyre.

The part of the tyre in which the rubber composition of the present invention is used is not specifically limited and may be appropriately selected depending on the intended purpose. For example, the rubber composition may be used in the tread, base treads, side walls, side-reinforcing rubbers, bead fillers, etc. Among these, the rubber composition is advantageously used in the tread component.

Regarding the method for producing the tyre, any method known to those skilled in the art can be used. For example, components generally used in tyre production, such as a carcass layer, a belt layer, a tread layer and the like formed of at least one selected from the group consisting of an unvulcanised rubber composition and a cord are layered in order on a drum for tyre formation and then the drum is removed to give a green tyre. Next, the green tyre is vulcanised under heat according to an ordinary method to produce a desired tyre.

### EXAMPLES

The present invention will now be described by the following non-limiting examples.

### Measurement methods

### Glass transition temperature (T_{g})

Glass transition temperatures (T_{g}) were measured by DSC (Differential Scanning Calorimetry) according to standard ASTM D3418 (1999).

*Cetyltrimethylammonium bromide (CTAB) adsorption method* - measured by the CTAB method according to ISO 5794-1G.

### Loss Factor (tan δ)

The loss factor (tangent δ, or tan δ) at different temperatures is used to evaluate rolling resistance and wet traction. Tan δ at 0°C is a predictor of wet grip. Tan δ at 60°C is a predictor of rolling resistance (RR). Polymer miscibility is indicated by the ratio of tan δ at 0°C / tan δ at 60°C. Dynamic physical testing to determine tan δ was conducted in accordance with the ISO 4664 standard.

### Elastic Modulus (E')

The Elastic Modulus (E') is used to evaluate grip performance. Dynamic physical testing to determine E' at 30°C and -20°C was conducted in accordance with the ISO 4664 standard. E' at 30°C is used as an indicator of dry balance/handling. The ratio of E' at 30°C and tan δ at 60°C is a predictor of dry grip.

### Mooney viscosity

Mooney viscosity was measured on the raw polymer according to the ASTM D1646 Standard.

### Processability

The processability or (compound viscosity) is measured using a rubber process analyser by measuring the shear modulus (G') at 100% strain at 130°C of the rubber compound before vulcanisation.

### General method

The following components were compounded in the amounts recited in Table 1 below. In Table 1 the amounts are all in part per hundred rubber (phr). In preparing the rubber composition of the present invention, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer or Banbury mixer may be used. For moulding the rubber composition into sheet or strip shape, any known moulding machine such as extrusion moulding machine or press moulding machine may be used.

### Components

- Elastomers:: Functionalised solution styrene-butadiene rubber, which is functionalised with terminal aminosilane groups of Formula (I) (ENEOS HPR540) (SSBR1)
Functionalised solution styrene-butadiene rubber, which is functionalised with terminal carboxyl groups and has an average MW of 690 kDa (prepared according to Example 3 of WO 2014/173706 A1) (SSBR2)
- Silica:: High surface area silica having a CTAB surface area of 185-215 m²g⁻¹; and an NSA surface are of 215-255 m²g⁻¹ (Evonik ULTRASIL^{®} 9100GR)
- Hydrocarbon resins:: C5 resin having a T_{g} of 69-79°C (Eastman IMPERA E1780)
Rosinic resin having a T_{g} of 49°C (Kraton Silvatraxx 2097)
- Oil:: Octyl oleate
RAE oil (Repsol Extensoil 14)
- Further Additives:: Carbon black (Corax^{®} N234) Silane (Evonik Industries AG Si 69^{®}) Aluminium trihydroxide (Al(OH)₃) Zinc stearate Sulfur 1,3-diphenyl guanidine (DPG) Zinc oxide (ZnO) Stearic acid 2,2,4-trimethyl-1,2-dihydroquinoline polymer (TMQ) Paraffinic wax Dibenzothiazyl disulfide (MBTS) N-cyclohexyl-2-benzothiazyl sulfenamide (CBS) N-(1,3-Dimethylbutyl)-N'-phenyl-p-phenylenediamine (6PPD) Pre-vulcanisation inhibitor (PVI).

**Table 1**

| **Materials** | **Ex. 1** | **Ex. 2** | **Comp. Ex. 1** | **Comp. Ex. 2** |
|---|---|---|---|---|
| SSBR1 | 100 | 0 | 100 | 0 |
| SSBR2 | 0 | 100 | 0 | 100 |
| C5 Resin | 0 | 0 | 27 | 27 |
| Rosinic resin | 27 | 27 | 0 | 0 |
| RAE oil | 14 | 14 | 14 | 14 |
| Octyl oleate | 13.5 | 13.5 | 13.5 | 13.5 |
| High surface area Silica | 107 | 107 | 107 | 107 |
| Carbon black | 8 | 8 | 8 | 8 |
| Silane | 10.7 | 10.7 | 10.7 | 10.7 |
| Al(OH)₃ | 15 | 15 | 15 | 15 |
| Zinc stearate | 2 | 2 | 2 | 2 |
| Sulfur | 1.8 | 1.8 | 1.8 | 1.8 |
| DPG | 1.4 | 1.4 | 1.4 | 1.4 |
| ZnO | 1 | 1 | 1 | 1 |
| Stearic Acid | 2 | 2 | 2 | 2 |
| TMQ | 0.3 | 0.3 | 0.3 | 0.3 |
| Wax | 2.2 | 2.2 | 2.2 | 2.2 |
| MBTS | 1.3 | 1.3 | 1.3 | 1.3 |
| CBS | 1.35 | 1.35 | 1.35 | 1.35 |
| 6PPD | 1.7 | 1.7 | 1.7 | 1.7 |
| PVI | 1.7 | 1.7 | 1.7 | 1.7 |

Table 2 shows measurements of various mechanical properties performed on tread pieces prepared using the compositions of Table 1.

**Table 2**

| | **Ex. 1** | **Comp. Ex. 1** | **Ex. 2** | **Comp. Ex. 2** |
|---|---|---|---|---|
| Polymer immiscibility | 104 | 100 | 109 | 100 |
| Winter performance | 98 | 100 | 99 | 100 |
| Wet grip | 100 | 100 | 105 | 100 |
| Dry handling | 100 | 100 | 98 | 100 |
| Dry grip | 102 | 100 | 104 | 100 |
| Processability | 113 | 100 | 100 | 100 |
| TOTAL | 617 | 600 | 615 | 600 |

Resins are known to exhibit lower miscibility with low T_{g} polymers, which results in lower filler dispersion and higher stiffness. The present inventors have discovered that combining polymers comprising a heteroatomic functional group with resins bearing a heteroatomic functional group can lead to higher immiscibility of the resin in matrix. This immiscibility leads to higher hysteresis loss between 0-30°C, that is the area controlling the wet/dry grip. To this end it has been obtained an improvement of wet/dry grip/dry handling balance, while keeping winter performance without any impact on processability. In particular combining a polymer functionalised with a carboxyl group can increase the immiscibility of the resin with the polymer. This results in higher polymer/resin immiscibility leading to improved balance of wet/dry grip/dry handling, while keeping winter performance without any impact on processability.

## Claims

1. A rubber composition for a pneumatic tyre comprising:
a styrene and butadiene copolymer (SBR), wherein the SBR has a glass transition temperature (T_{g}) of from -90°C to -30°C, and wherein the SBR comprises a heteroatomic functional group;
optionally a diene elastomer; and,
a hydrocarbon resin comprising a heteroatomic functional group, wherein the hydrocarbon resin has a T_{g} of at least 30°C; and,
an oil;
wherein the total amount of the hydrocarbon resin and the oil is at least 40 phr.

2. The rubber composition according to claim 1, wherein the SBR has a T_{g} of from -65°C to -55°C.

3. The rubber composition according to claim 1 or 2, wherein the SBR is present in an amount of at least 50 phr, preferably from 60 to 100 phr, more preferably 100 phr.

4. The rubber composition according to any one of the preceding claims, wherein the SBR comprises a heteroatomic functional group is an SBR comprising a heteroatomic functional group selected from the group consisting of alcohol, carboxyl, ester, amide, amine, imine, imide, nitrile, oxime, thiol, sulfide, sulfoxide, sulfone, sulfinic acid, sulfonic acid, sulfonate ester, thiocarboxylic acid, thioester, silane, alkoxysilane, aminosilane and silanol and combinations thereof, preferably carboxyl or aminosilane.

5. The rubber composition according to any one of the preceding claims, wherein the SBR is functionalised with carboxyl groups, preferably terminal carboxyl groups.

6. The rubber composition according to claim 5, wherein the terminal carboxyl groups are groups of the Formula (I): 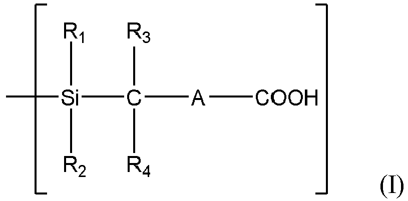 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉, wherein R₇ may be hydrogen, C₁ to C₆ linear alkyl or trimethylsilyl and wherein R₈ and R₉ may independently be C₁ to C₆ linear alkyl.

7. The rubber composition according to claim 5 or 6, wherein the terminal carboxyl group is bonded to the SBR via one or more divalent structural elements of the Formula (V): 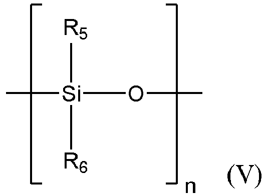 preferably wherein the divalent structural elements are derived from cyclosiloxanes of the Formula (IV): 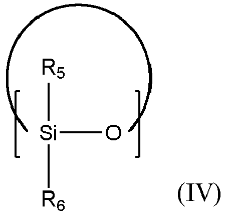 wherein
n is an integer from 3 to 6;
R₅, R₆ are the same or different and are each independently a hydrogen, alkyl, cycloalkyl, aryl, alkaryl, or aralkyl radical; which may contain one or more heteroatoms, preferably wherein the heteroatoms are O, N, S or Si, more preferably wherein the divalent structural elements are derived from one or more cyclosiloxanes selected from the group consisting of hexamethylcyclotrisiloxane, octamethylcyclotetrasiloxane, decamethylcyclopentasiloxane, and dodecamethylcyclohexasiloxane.

8. The rubber composition according to any one of claims 1 to 4, wherein the terminal aminosilane functional groups have a structure according to Formula (VI): 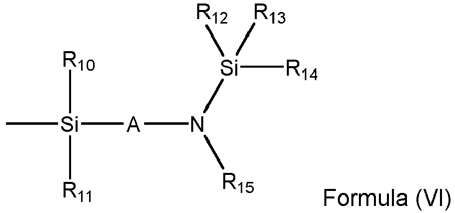 wherein:
A is a C₁-C₁₂ alkylene group or a C₁-C₁₂ alkenylene group;
R₁₀ and R₁₁ are independently selected from a C₁-C₁₂ alkyl group, a C₁-C₁₂ alkenyl group, and a C₁-C₁₂ alkoxy group;
R₁₂, R₁₃ and R₁₄ are independently selected from a C₁-C₁₂ alkyl group, a C₁-C₁₂ alkenyl group, and a C₁-C₁₂ alkoxy group;
R₁₅ may be a C₁-C₁₂ alkyl group or a -SiR₁₆R₁₇R₁₈ group, wherein R₁₆, R₁₇ and R₁₈ are independently selected from a C₁-C₁₂ alkyl group, a C₁-C₁₂ alkenyl group, and a C₁-C₁₂ alkoxy group.

9. The rubber composition according to claim 8, wherein:
A is a C₁-C₁₂ alkylene group;
R₁₀ and R₁₁ are independently selected from a C₁-C₁₂ alkyl group, and a C₁-C₁₂ alkoxy group;
R₁₂, R₁₃ and R₁₄ are independently selected from a C₁-C₁₂ alkyl group, a C₁-C₁₂ alkenyl group, and a C₁-C₁₂ alkoxy group;
R₁₅ is a -SiR₁₆R₁₇R₁₈ group, wherein R₁₆, R₁₇ and R₁₈ are independently selected from a C₁-C₁₂ alkyl group, a C₁-C₁₂ alkenyl group, and a C₁-C₁₂ alkoxy group.

10. The rubber composition according to claim 8 or 9, wherein:
A is a C₂-C₄ alkylene group;
R₁₀ is a C₁-C₄ alkoxy group and R₁₁ is a C₁-C₄ alkyl group, and;
R₁₂, R₁₃ and R₁₄ are each independently a C₁-C₄ alkyl group;
R₁₅ is a -SiR₁₆R₁₇R₁₈ group, wherein R₁₆, R₁₇ and R₁₈ are each independently a C₁-C₄ alkyl group.

11. The rubber composition according to any one of claims 8 to 10, wherein:
A is a C₂-C₄ alkylene group;
R₁₀ is a C₁-C₄ alkoxy group and R₁₁ is a C₁-C₄ alkyl group, and;
R₁₂, R₁₃ and R₁₄ are a C₁-C₃ alkyl group;
R₁₅ is a -SiR₁₆R₁₇R₁₈ group, wherein R₁₆, R₁₇ and R₁₈ are a C₁-C₃ alkyl group.

12. The rubber composition according to any one of the preceding claims, wherein the oil is one or more selected from the group consisting of liquid diene polymers, polyolefinic oils, naphthenic oils, paraffinic oils, DAE oils, MES (Medium Extracted Solvates) oils, TDAE (Treated Distillate Aromatic Extracts) oils, RAE oil (Residual Aromatic Extract oil), TRAE oil (Treated Residual Aromatic Extract) and SRAE oil (Safety Residual Aromatic Extract oil), mineral oils, vegetable oils, ether plasticizers, ester plasticizers, oleates such as octyl oleate or 2-ethylhexyl oleate, phosphate plasticizers, sulfonate plasticizers and mixtures thereof.

13. The rubber composition according to any one of the preceding claims, wherein the hydrocarbon resin comprising a heteroatomic functional group is a hydrocarbon resin comprising a heteroatomic functional group selected from the group consisting of alcohol, carboxyl, ester, amide, amine, thiol, and sulfonic acid, preferably a carboxyl group.

14. The rubber composition according to any one of the preceding claims, wherein the hydrocarbon resin comprising a heteroatomic functional group is a hydrocarbon resin comprising a carboxyl group.

15. The rubber composition according to claim 14, wherein the hydrocarbon resin comprising a carboxyl group is a rosinic resin.

16. The rubber composition according to any one of the preceding claims, wherein the hydrocarbon resin is present in an amount of from 5 to 50 phr, preferably from 10 to 40 phr, preferably from 15 to 35 phr, more preferably from 25 to 30 phr.

17. The rubber composition according to any one of the preceding claims, wherein the oil comprises an RAE oil and octyl oleate.

18. The rubber composition according to any one of the preceding claims, wherein the oil is present in an amount of from 10 to 40 phr, preferably from 20 to 35 phr, more preferably from 25 to 30 phr.

19. The rubber composition according to any one of the preceding claims, wherein the total of the hydrocarbon resin and the oil is from 45 to 70 phr, preferably from 50 to 60 phr.

20. The rubber composition according to any one of the preceding claims, wherein the ratio of the hydrocarbon resin to the oil is from 3:1 to 1:3, preferably from 2:1 to 1:2, more preferably from 1.5:1 to 1:1.5.

21. A pneumatic tyre comprising the rubber composition according to any one of claims 1 to 20.

22. A pneumatic tyre prepared from the rubber composition according to any one of claims 1 to 20.

23. Use of the rubber composition according to any one of claims 1 to 20 in the manufacture of a pneumatic tyre.
